(19) Europäisches Patentamt
European Patent Office
Office européen des brevets

(11) Numéro de publication: **0 309 349 A1**

(12) # DEMANDE DE BREVET EUROPEEN

(21) Numéro de dépôt: **88402384.7**

(22) Date de dépôt: **22.09.88**

(51) Int. Cl.4: **C 09 D 3/82**

(30) Priorité: **23.09.87 FR 8713139**

(43) Date de publication de la demande: **29.03.89 Bulletin 89/13**

(84) Etats contractants désignés: **AT BE CH DE ES FR GB GR IT LI LU NL SE**

(71) Demandeur: **C.R.E.E. CONSEIL RECHERCHE ETUDE ENGINEERING**
**3, rue du Four**
**F-78510 Triel Sur Seine (FR)**

(72) Inventeur: **Letay, Martial**
**2, Rue Pierre et Marie Curie**
**F-95130 Franconville (FR)**

(74) Mandataire: **Gillard, Marie-Louise et al**
**Cabinet Beau de Loménie 55, Rue d'Amsterdam**
**F-75008 Paris (FR)**

(54) **Compositions de revêtement protecteur de surfaces non poreuses à base de polysiloxanes.**

(57) L'invention concerne une composition de revêtement protecteur de surfaces non poreuses à base de polysiloxanes.

Ces compositions contiennent un polysiloxane, un acide perfluoré, un acide minéral ou organique et un solvant.

Application : revêtement protecteur ayant notamment des propriétés non adhérentes.

EP 0 309 349 A1

## Description

**Compositions de revêtement protecteur de surfaces non poreuses à base de polysiloxanes.**

La présente invention a pour objet des compositions de revêtement protecteur de surfaces non poreuses à base de polysiloxanes.

Il s'avère généralement indispensable de traiter les surfaces non poreuses pour les rendre hydrophobes et éviter le dépôt sur celles-ci de toutes sortes de substances qui affectent l'aspect de ces surfaces, telles que salissures, calcaires, insectes et agents polluants.

On a déjà proposé un procédé de traitement des surfaces non poreuses à l'aide de polysiloxanes. Ce procédé est décrit notamment dans le brevet US 3 579 540. Les compositions mises en oeuvre pour la réalisation de ce procédé comprennent un polysiloxane, un acide minéral et un solvant.

Ces compositions permettent d'obtenir une bonne protection des surfaces non poreuses ; toutefois, elles présentent l'inconvénient de ne pas résister dans le temps. Elles offrent une faible résistance à l'abrasion, ainsi qu'aux agents chimiques, aux détergents et aux solvants.

On a maintenant trouvé qu'il était possible d'améliorer considérablement les performances de ces compositions en y ajoutant un acide perfluoroalkylé.

La présente invention est donc relative à l'utilisation d'acides perfluoroalkylés dans des compositions de revêtement protecteur à base de polysiloxanes.

Plus précisément, l'invention concerne une composition de revêtement protecteur de surfaces non poreuses comprenant :

1) au moins un acide perfluoroalkylé répondant à la formule générale :

$R_F-(CH_2)_n-X$

dans laquelle : - $R_F$ désigne un radical perfluoroalkylé, linéaire ou ramifié, contenant de 2 à 20 atomes de carbone, de préférence un radical perfluoroalkylé linéaire contenant de 6 à 8 atomes de carbone;

- n est un nombre entier compris entre 0 et 10, de préférence égal à 0 ou 2 ;
- X représente un groupement acide carboxylique ou sulfonique, de préférence sulfonique,

2) un polysiloxane de formule

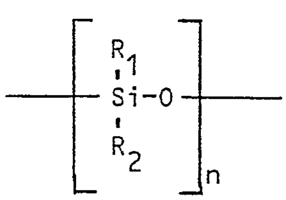

dans laquelle : - n est un nombre entier supérieur à 1 ;

- $R_1$ est un radical alkyle linéaire ou ramifié ayant 1 à 7 atomes de carbone,par exemple le radical méthyle, ou un radical aryle à 6 atomes de carbone, par exemple le radical phényle ;
- $R_2$ représente l'hydrogène, un radical alkyle linéaire ou ramifié ayant 1 à 7 atomes de carbone,par exemple le radical méthyle, ou un radical aryle à 6 atomes de carbone, par exemple le radical phényle,

3) un acide minéral ou organique ; et

4) un solvant approprié, de préférence un solvant polaire.

Par radical "perfluoroalkylé", on désigne dans la présente description un radical alkyle dont les atomes d'hydrogène sont partiellement ou totalement remplacés par des atomes de fluor.

Les acides perfluoroalkylés mis en oeuvre dans la composition selon l'invention sont connus depuis longtemps et décrits dans la littérature technique. Par exemple, les acides perfluorés sulfoniques répondant à la formule ci-dessus ont été décrits en particulier dans le brevet FR 1 600 425. Les acides perfluorés carboxyliques répondant à la formule ci-dessus sont décrits par exemple dans l'ouvrage intitulé "Aliphatic Fluorinated Compounds", Ed. Reinhold Publishing Corporation. Auteurs : A.M. LOVELACE and A.L., 1958 page 201.

Des exemples d'acides perfluorés carboxyliques appropriés sont les composés de formules :

$CF_3$ COO H ; $CF_3$ $(CF_2)_3$ COO H ; $CF_3$ $(CF_2)12$ COO H.

Les acides perfluoroalkylés préférés aux fins de l'invention sont les acides de formule (I) ci-dessus, dans laquelle X est un groupement acide sulfonique, n est égal à 0 ou 2 et $R_F$ est l'un des radicaux ci-après :

$-C_6F_{13}$ ou $-C_8F_{17}$

A titre d'exemple d'acides perfluoroalkylés préférés, on peut citer l'acide de formule :

$C_6F_{13}C_2H_4SO_3H$

Les acides perfluoroalkylés mis en oeuvre dans la composition selon l'invention peuvent avoir des concentrations en matière sèche active comprises entre 5 et 100 %, de préférence entre 45 et 55 % en poids.

Les proportions pondérales d'acide perfluoroalkylé utilisées dans la composition selon l'invention sont comprises entre 0,005 et 5 % par rapport au poids du mélange polysiloxane, alcool, acide et de préférence entre 0,01 % et 0,5 %.

Dans la composition selon l'invention, l'acide perfluoroalkylé est en mélange avec un solvant approprié, dans lequel il est partiellement ou totalement soluble, de préférence un solvant polaire.

Les solvants qui peuvent être utilisés aux fins de l'invention sont les alcools, les glycols, tels que par exemple le diéthylèneglycol, le butyldiglycol ; les solvants aromatiques, tels que par exemple le toluène, le benzène, le xylène, les cétones, telles

que par exemple la méthyléthylcétone, l'acétone, la méthylisobutylcétone ; les esters, tels que les acétates d'éthyle, de propyle ou de butyle. De préférence, on utilise comme solvant un alcool de formule $R_1OH$, dans laquelle $R_1$ est un groupe alkyle linéaire ou ramifié contenant 1 à 12 atomes de carbone ou un groupe cycloalkyle en $C_3$-$C_6$. Les alcools à chaîne linéaire ayant de 1 à 8 atomes de carbone et notamment l'isopropanol sont particulièrement préférés aux fins de l'invention. La proportion pondérale du solvant représente le complément à 100 % de la quantité de l'ensemble des autres constituants.

De plus, la composition selon l'invention contient un acide minéral ou organique. Les acides utilisés pour renforcer le caractère acide de la composition selon l'invention,tels que par exemple l'acide sulfurique, l'acide chlorhydrique, l'acide phosphorique, l'acide para toluène sulfonique, peuvent être utilisés concentrés ou dilués. On utilise de préférence un acide concentré, tel que l'acide sulfurique de 80 à 98 %. Les proportions pondérales d'acides (suivant leur nature et leur concentration) peuvent être comprises entre 0,5 % et 20 % en poids par rapport à la composition de base. On utilisera de préférence des proportions comprises entre 0,5 et 5 % d'un acide fort concentré.

Enfin, la composition selon l'invention contient un polysiloxane de formule générale :

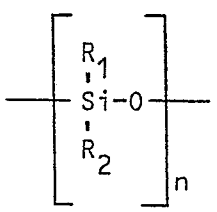

dans laquelle : - n est un nombre entier supérieur à 1 ;

- $R_1$ est un radical alkyle linéaire ou ramifié ayant 1 à 7 atomes de carbone, par exemple le radical méthyle, ou un radical aryle à 6 atomes de carbone, par exemple le radical phényle ;
- $R_2$ représente l'hydrogène, un radical alkyle linéaire ou ramifié ayant 1 à 7 atomes de carbone, par exemple le radical méthyle, ou un radical aryle à 6 atomes de carbone, par exemple le radical phényle.

On utilise de préférence les méthyl-polysiloxanes, les diméthyl-polysiloxanes, les méthyl-phényl-polysiloxanes et les diphényl-polysiloxanes et, plus particulièrement, les méthyl-polysiloxanes qui favorisent l'étalement des acides perfluoroalkylés et permettent l'obtention d'un film parfaitement homogène, uniforme et continu.

Le poids moléculaire des méthyl-polysiloxanes appropriés aux fins de l'invention peut être compris entre 380 et 65 000 et, de préférence, entre 600 et 2 000.

Les proportions de méthyl-polysiloxane (de poids moléculaire compris entre 600 et 2 000) utilisées dans la composition selon l'invention sont comprises entre 1 et 40 % par rapport au poids du mélange acide perfluoroalkylé, alcool et acide, et de préférence entre 2 et 15 %.

Le mélange s'obtient par addition sous agitation vive du polysiloxane dans le mélange décrit ci-dessus d'acide perfluoroalkylé, d'alcool et d'acide minéral.

La composition selon l'invention s'obtient par

1) addition de l'acide perfluoroalkylé dans le solvant sous agitation lente et à température ambiante,

2) addition, sous agitation moyenne, de l'acide minéral ou organique au mélange ainsi obtenu,

3) addition,sous agitation vive, du polysiloxane au mélange résultant.

La composition selon l'invention convient pour la réalisation de revêtements protecteurs ou films protecteurs possédant une remarquable adhérence sur les surfaces ou substrats non poreux sans traitement de surface préalable.

Ces films protecteurs sont obtenus par application de la composition de l'invention sur le substrat non poreux à traiter selon des procédés classiques couramment utilisés dans le domaine de la peinture (pulvérisation, pinceau, rouleau, etc.) et évaporation du solvant.

Pour les petites surfaces, la composition selon l'invention peut par exemple être appliquée en deux couches minimum selon le mode opératoire suivant :

1) On applique une première couche par pulvérisation ou dépôt de la composition à l'aide d'un coton, d'une éponge ou de tout autre moyen d'application ;

2) on étale cette couche à l'aide d'un chiffon, d'une éponge ou de tout autre moyen d'application en croisant les passes ;

3) on laisse sécher deux minutes au minimum ;

4) ensuite, on reproduit les étapes 1) à 3) ci-dessus pour appliquer une seconde couche et

5) on essuie à l'aide d'un chiffon sec, d'un coton sec ou de tout autre textile absorbant tissé ou non jusqu'à l'obtention d'un film invisible et transparent.

Pour les grandes surfaces, on peut appliquer la composition à l'aide d'une raclette à vitre dont le caoutchouc a été remplacé par un feutre, en opérant sensiblement comme pour les petites surfaces. Après l'application, on frotte la surface avec une éponge ou un chiffon abondamment mouillé, puis on essuie à l'aide d'une raclette.

Les films protecteurs obtenus après application sont transparents et invisibles. Il n'apparaît aucun phénomène de diffraction de la lumière, d'irisation ou d'absorption des rayons ultraviolets et infrarouges.

Les films protecteurs obtenus après application de la composition selon l'invention sont insolubles dans l'eau, les produits pétroliers, les détergents, les acides et bases dilués, les solvants, l'eau de mer et les alcools.

La composition selon l'invention peut s'appliquer indéfiniment sur des surfaces déjà traitées sans que l'on ait besoin d'ôter le film précédent. Elle ne

modifie pas l'aspect ni le toucher des surfaces traitées. Le film sec n'est éliminé que par le phénomène d'abrasion.

La composition selon l'invention se distingue des produits de l'art antérieur par sa grande simplicité de mise en oeuvre avec des moyens conventionnels. Les surfaces non poreuses traitées selon l'invention sont chimiquement et thermiquement stables. La composition selon l'invention ne génère pas, après application, d'effets secondaires connus. Le film protecteur sec obtenu avec la composition selon l'invention est chimiquement inerte, il ne pèle pas, ne se craquèle pas et ne change pas de couleur. Il est non réfléchissant, il augmente la résistance à la rayure et à l'abrasion des surfaces traitées. D'autre part, il ne génère pas le phénomène de creasing sur les matières plastiques.

Le film protecteur obtenu selon l'invention confère aux surfaces non poreuses revêtues un caractère hydrophobe et des propriétés anti-adhérentes. La composition selon l'invention permet en effet d'obtenir une réduction considérable de la tension superficielle de la surface non poreuse traitée même par application d'un film d'épaisseur extrêmement faible (1 micron environ). Elle permet ainsi d'éviter le dépôt de toutes substances qui adhèrent normalement sur les substrats non poreux : taches, salissures, givre, calcaire, insectes, particules contribuant à la pollution atmosphérique, affiches, etc.

La composition selon l'invention convient pour la protection de toute substance ou substrat non poreux, et plus particulièrement aux substrats en verre, en céramique non poreuse, en aluminium anodisé, en porcelaine, en polycarbonate, en résine époxy, en polyméthacrylate, en grès non poreux, en émail, en chrome, en peinture cuite au four, en faïence, en acier inoxydable.

La composition selon l'invention a de nombreux domaines d'applications. Par exemple, elle convient comme produit d'entretien de la maison pour le traitement des vitres, des fenêtres, des baies vitrées, des hottes, des vérandas, des solariums et des éclairages extérieurs. Son efficacité est d'environ 6 à 12 mois. De plus, elle permet d'espacer les opérations de nettoyage et de réduire la durée de celles-ci. D'autre part, la vision à travers le support traité avec la composition selon l'invention n'est pas altérée.

Elle permet de réduire d'environ cinq fois les dépôts dus à la pollution atmosphérique.

Elle permet d'assurer un traitement anti-affiche et anti-autocollant de longue durée sur le verre.

Elle convient également pour le traitement du sanitaire. Appliquée sur des surfaces parfaitement propres, elle empêche les dépôts de calcaire et de tartre. De plus, elle facilite le nettoyage et évite l'utilisation de poudres et de liquides abrasifs.

Elle convient aussi pour le nettoyage de la cuisine (paillasses, hottes, éviers, plaques de cuisson, etc.). Elle facilite l'élimination des corps gras et des aliments ou liquides même fortement calcinés.

D'autres domaines d'applications sont l'automobile, l'électricité, la marine et l'aviation.

Elle peut être en effet utilisée pour le traitement de toutes les surfaces vitrées des véhicules.

Elle peut aussi être utilisée dans le domaine de la moto pour le traitement des visières, des casques, etc. Ce traitement de surface apporte de très hautes caractéristiques d'inmouillabilité et d'anti-adhérence au verre traité (eau de pluie, moucherons, etc.). Il empêche aussi l'adhérence du givre et de la nicotine, des vapeurs grasses et des dépôts dus à la pollution atmosphérique.

Appliquée sur toute la surface du pare-brise, elle permet, à faible vitesse, de n'utiliser les essuie-glaces que d'une manière très intermittente. A grande vitesse à partir de 80-100 km/h, il est possible de les arrêter tout en ayant une visibilité supérieure.

Elle permet d'augmenter la visibilité par temps de pluie, les balais ne couvrant pas la surface intégrale du pare-brise.

Au cours des longs trajets, elle supprime l'effet hypnotique dû au va-et-vient continuel des essuie-glaces dans le champ de vision.

La durée d'efficacité dans ce domaine est d'environ un mois. Elle est fonction de la fréquence d'utilisation des essuie-glaces (phénomène d'abrasion) et des conditions atmosphériques.

Elle convient aussi pour le traitement des ailettes des isolateurs (porcelaine et époxy). Elle évite les effets de contournements électriques et maintient ceux-ci propres plus longtemps.

La composition selon l'invention convient également pour le traitement des vitres et des hublots des bateaux. Elle évite l'adhérence du sel et du givre sur les surfaces ainsi traitées.

Enfin, la composition selon l'invention a une stabilité au stockage d'au minimum 1 an alors que les compositions selon l'art antérieur sont stables pendant 2 à 5 mois seulement.

La présente invention va être maintenant décrite plus en détail dans les exemples illustratifs ci-après :

EXEMPLE 1 - Préparation d'une composition selon l'invention.

On a mélangé sous agitation lente 0,05 g de l'acide perfluoroalkylé de formule $C_6F_{13}C_2H_4SO_3H$ dans 90,95 g d'alcool isopropylique.

On a ensuite ajouté à ce mélange 2 g d'acide sulfurique sous agitation moyenne.

Puis, au mélange résultant, on a ajouté sous agitation vive 7 g de polysiloxane, à savoir le méthyl-polysiloxane de poids moléculaire moyen de 1 000.

On a obtenu une composition liquide homogène que l'on peut appliquer telle quelle sur les surfaces non poreuses ou utiliser à l'état dilué dans un solvant tel que l'alcool isopropylique. On peut également utiliser la composition non diluée.

Cette composition a été utilisée pour le revêtement de différents substrats, tels que le verre, l'acier inoxydable et l'émail.

EXEMPLE 2 - Essai comparatif.

On a réalisé la même composition que ci-dessus sans l'acide perfluoroalkylé.

Chacune des compositions a été appliquée, à l'état non dilué, selon le mode opératoire indiqué

précédemment pour les petites surfaces et on a mesuré la durée de vie de chacun des revêtements obtenus. Les résultats obtenus qui figurent dans le tableau ci-après montrent l'intérêt de la composition selon l'invention.

| Nature du support | DUREE DE VIE | |
|---|---|---|
| | Revêtement protecteur avec la composition de l'exemple 1 | Revêtement protecteur avec la composition de l'exemple 2 (sans acide perfluoré) |
| - Email sanitaire Anti-tartre Anti-salissure (effet anti-adhérent) | Supérieure à 6 mois<br>Supérieure à 2 mois | Inférieure à 2 mois<br>Inférieure à 1 mois |
| - Verre de cabine téléphonique (anti-affiche) | Supérieure à 4 mois | Inférieure à 2 mois |
| - Verre plat en extérieur (baies vitrées) | Supérieure à 12 mois | Inférieure à 6 mois |
| - Acier inoxydable (robinetterie/ paillasse de laboratoire) | Supérieure à 2 mois | Inférieure à 1 mois |

**Revendications**

1 - Composition de revêtement protecteur de surfaces non poreuses à base de polysiloxanes, caractérisée en ce qu'elle contient, en poids par rapport au poids total de la composition, 0,005 à 5 % d'au moins un acide perfluoroalkylé répondant à la formule générale :

$R_F-(CH_2)_n-X$

dans laquelle : - $R_F$ désigne un radical perfluoroalkylé, linéaire ou ramifié, contenant de 2 à 20 atomes de carbone, de préférence un radical perfluoroalkylé linéaire contenant de 6 à 8 atomes de carbone ;
- n est un nombre entier compris entre 0 et 10, de préférence égal à 0 ou 2 ;
- X représente un groupement acide carboxylique ou sulfonique, de préférence sulfonique ;
1 à 40 % d'un polysiloxane de formule :

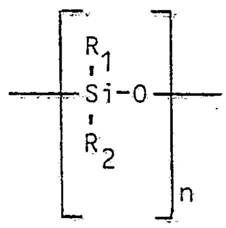

dans laquelle : - n est un nombre entier supérieur à 1 ;
- $R_1$ est un radical alkyle linéaire ou ramifié ayant 1 à 7 atomes de carbone, ou un radical aryle à 6 atomes de carbone ;
- $R_2$ représente l'hydrogène, un radical alkyle linéaire ou ramifié ayant 1 à 7 atomes de carbone, ou un radical aryle à 6 atomes de carbone ;
0,5 à 20 % d'un acide minéral ou organique ;
le complément à 100 % d'un solvant.

2 - Composition selon la revendication 1, caractérisée en ce que le solvant est un solvant polaire.

3 - Composition selon l'une des revendications 1 ou 2, caractérisée en ce que le solvant est l'alcool isopropylique.

4 - Composition selon l'une quelconque des revendications 1 à 3, caractérisée en ce que l'acide perfluoroalkylé est l'acide de formule :

$C_6F_{13}C_2H_4SO_3H$

5 - Composition selon l'une quelconque des revendications 1 à 4, caractérisée en ce que l'acide minéral est l'acide sulfurique.

6 - Composition selon l'une quelconque des revendications 1 à 5, caractérisée en ce que le polysiloxane est un méthyl-polysiloxane.

Office européen des brevets

# RAPPORT DE RECHERCHE EUROPEENNE

Numero de la demande

EP 88 40 2384

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-4 410 563 (H.P. RICHTER)<br>* Revendications 1,5-8,14; colonne 3, lignes 20-26,37-62; colonne 5, exemples 6,7 * | 1-6 | C 09 D 3/82 |
| X | GB-A-2 051 843 (DAICEL)<br>* Revendications 1,4,5; page 1, lignes 5-12; page 2, lignes 53-104,117-130; page 3, lignes 1-27 * | 1-6 | |
| A | US-A-3 998 643 (R. LIDDLE)<br>* Revendication 1 * | 1 | |
| A | US-A-3 560 436 (J.P. SZENDREY)<br>* Revendication 1 * | 1 | |
| A,D | US-A-3 579 540 (H.G. OHLHAUSEN)<br>* Revendication 1; colonne 1, lignes 30-34 * | 1 | |
| A | GB-A-2 005 288 (SHIN-ETSU)<br>* Revendications 1,4; page 3, lignes 26-33,43-49; page 4, lignes 1-3 * | | DOMAINES TECHNIQUES RECHERCHES (Int. Cl.4)<br>C 09 D<br>C 08 K |

Le présent rapport a été établi pour toutes les revendications

| Lieu de la recherche | Date d'achèvement de la recherche | Examinateur |
|---|---|---|
| LA HAYE | 24-11-1988 | DEPIJPER R.D.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)